Europäisches Patentamt

European Patent Office

Office européen des brevets

(19)

(11) Veröffentlichungsnummer: **0 277 512**
B1

(12) **EUROPÄISCHE PATENTSCHRIFT**

(45) Veröffentlichungstag der Patentschrift:
07.03.90

(21) Anmeldenummer: 88100429.5

(22) Anmeldetag: 14.01.88

(51) Int. Cl.⁴: **F16G 13/16**

(54) **Mittel- oder Endbefestigungsteil für kettenförmige Energieleitungsträger.**

(30) Priorität: 04.02.87 DE 3703240

(43) Veröffentlichungstag der Anmeldung:
10.08.88 Patentblatt 88/32

(45) Bekanntmachung des Hinweises auf die Patenterteilung:
07.03.90 Patentblatt 90/10

(84) Benannte Vertragsstaaten:
CH ES FR GB IT LI

(56) Entgegenhaltungen:
EP-A- 0 192 853
DE-U- 8 703 481
US-A- 3 157 376
US-A- 4 129 277
US-A- 4 392 344
US-A- 4 499 720

(73) Patentinhaber: Klein, Ernst, Lakronstrasse 43,
D-4000 Düsseldorf 12(DE)

(72) Erfinder: Klein, Ernst, Lakronstrasse 43,
D-4000 Düsseldorf 12(DE)

(74) Vertreter: Wangemann, Horst, Dipl.-Ing.,
Stresemannstrasse 28, D-4000 Düsseldorf 1(DE)

## Beschreibung

Die Erfindung betrifft einen Mittel- oder Endbefestigungsteil für kettenförmige Energieleitungsträger der im Oberbegriff des Hauptanspruches genannten Art.

Für kettenförmige Energieleitungsträger sind Endbefestigungsteile bekannt (US-A- 4 129 277), die aus Blech bestehen und bei denen die beiden parallelen Wangen mit Abwinklungen versehen sind, durch deren Bohrungen Befestigungsssschrauben ragen. Die Abwinklungen der beiden Wangen können auch miteinander verbunden sein (US-A- 3 157 376), so daß sich ein mittlerer Stegmit zwei seitlichen Schenkeln eines nach oben offenen, U-förmigen Teils ergibt, wobei der Steg wiederum an oder auf einer Auflage oder Anlage mittels Schrauben zu befestigen ist. Neben diesen bekannten Mittel- oder Endbefestigungsteilen sind schwenkbar an den Wangen des Befestigungsteils angeordnete, in Seitenansicht etwa T-förmige Verbindungsteile bekannt. Durch die Bohrungen des den Querbalken des "T bildenden Abschnitts des Verbindungsteils sind die Befestigungsschrauben hindurchsteckbar. Ein derartiger Befestigungsteil hat den Vorzug, daß er unterhalb und oberhalb einer Anlage wie auch in einer senkrecht zur Längsachse des Energieleitungsträgers gelegenen Wand oder Anlage befestigbar ist, wozu es nur des Schwenkens des T-förmigen Verbindungsteils bedarf.

Diesen bekannten Mittel- oder Endbefestigungsteilen gegenüber besteht die Aufgabe der Erfindung darin, einen solchen Teil mit konstruktiv einfachen Mitteln herzustellen und universell einsetzbar zu machen, wobei der erfindungsgemäße Befestigungsteil im Prinzip an allen kettenförmigen Leitungsträgern anwendbar sein soll, gleichgültig, wie diese ausgebildet sind. Auch soll die Befestigung des erfindungsgemäßen Teils an einer Auflage oder Anlage einfach und problemlos vor sich gehen können, wobei der Befestigungsteil relativ hohen Beanspruchungen aussetzbar ist.

Zur Lösung dieser Aufgabe sieht die Erfindung die kennzeichnenden Merkmale des Hauptanspruches vor. - Die Merkmale der Unteransprüche dienen der Verbesserung und Weiterentwicklung der Merkmale des Haupt- bzw. des Nebenanspruches.

Kettenförmige Energieleitungsträger im Sinne der Erfindung können solche sein, deren einteilige Einzelglieder aus zwei Seitenteilen und einem oberen und einem unteren STeg bestehen und in ihrer Gesamtheit eine nach oben und unten offene Kette bilden. Es können auch Ketten sein, deren benachbarte Einzelglieder sich sowohl in gestreckter wie auch in gekrümmter Lage der Kette sich schuppenartig überlappen und daher ein geschlossenes, rohrartiges Gebilde entstehen lassen. Es können ferner parallele Kettengliederreihen Anwendung finden, die durch Querstege oder Querstegpaare verbunden sind. Letztlich können bei dieser Ausbildung der Kette die Kettenglieder der einen der beiden Gliederreihen in Kettenlängsrichtung entgegengesetzt zu den gleichartigen Kettengliedern der zweiten Gliederreihe angeordnet sein, wobei die Kettenglieder der einen Reihe um eine halbe Gliederlänge zu den Kettengliedern der zweiten Reihe versetzt sind.

Verbindungsmittelfrei im Sinne der Erfindung bedeutet, daß der Befestigungsteil aus den Wangen und aus an diese unmittelbar mit dem stationären Anschluß oder dem beweglichen Verbraucher verbindenden Schrauben besteht, d. h. ein zusätzlicher Befestigungsteil sich erübrigt.

Der Vorteil des erfindungsgemäßen einteiligen Befestigungsteils, der durch ein in der Kunststofftechnik bekanntes Verfahren hergestellt wird, offenbart sich in dem Umstand, daß er keine Bearbeitung wie z. B. das Bohren von Löchern od. dgl., das Abkanten oder das Anbringen von Nieten erfordert. Darüber hinaus bietet der erfindungsgemäße Befestigungsteil gegenüber bekannten Teilen für den gleichen Zweck den Vorteil, abgesehen von den Befestigungsschrauben, ausschließlich aus Kunststoff zu bestehen und daher auch dort einsetzbar zu sein, wo metallisches Material, z. B. wegen aggressiver Flüssigkeiten oder Gase nicht einsetzbar ist. -Durch das Verspannen des Befestigungsteils, d. h. der Wangen oder des Rahmens vorzugsweise über die gesamte oder annähernd gesamte Höhe der Wangen, mit der Anlage oder Auflage, ergibt sich eine erhöhte Festigkeit und Beanspruchbarkeit des Befestigungsteils, da die Schrauben außer ihrer Aufgabe den Teil mit einer An- oder Auflage zu verbinden noch ein zusätzliches Festigkeitselement bilden.

Von wesentlicher Bedeutung gegenüber bekannten Befestigungsteilen ist ferner, daß der gesamte Querschnitt zwischen den Wangen frei bleibt und Schraubenköpfe od. dgl., wenn auch nur teilweise, nicht in diesen Raum ragen und hierdurch ein Scheuern von Kabeln und Leitungen an diesen, in den Innenquerschnitt des Befestigungsteils ragenden Teilen vermieden wird. Damit steht bei dem erfindungsgemäßn Befestigungsteil der gesamte oder annähernd gesamte Innenquerschnitt zur Verfügung, der auch zwischen den Gliedern des kettenartigen Energieleitungsträgers gegeben ist.

Auf der Zeichnung sind Ausführungsbeispiele des erfindungsgemäßen Befestigungsteils dargestellt und zwar zeigen

Fig. 1 die Seitenansicht einer selbst- oder freitragenden Kette,

Fig. 2 bis 4 in Frontansicht im Querschnitt nach der Linie II - II der Fig. 4 und in Draufsicht eine Ausführungsform eines solchen Energieleitungsträgers aus Stegkettengliedern,

Fig. 5 die Anordnung und Befestigung einer Wange nach Fig. 2 bis 4 auf einer Auflage, wobei die Wange die Konfiguration der Wangen der einseitig anschließenden Kette hat,

Fig. 6 und 7 eine Abwandlung der Ausführungsform des Befestigungsteils nach Fig. 2 bis 4,

Fig. 8 und 9 eine weitere Ausführungsform der Wangen eines Befestigungsteils im Schnitt und in Draufsicht,

Fig. 10 die beiden auf gleicher seitlicher Höhe angeordneten Wangen der Ausführungsform nach Fig. 8 und 9 mit diese Wangen verbindenden Stegen,

Fig. 11 eine Wange in der Anordnung und Ausbildung, wie die nach Fig. 5, jedoch mit zweiseitigem Anschluß von Kettenabschnitten, wobei der Befestigungsteil als Mittelbefestigungsteil dient und

Fig. 12 bis 14 mögliche Ausbildungsformen der seitlichen Augen an den Wangen und der Bohrung bzw. Bohrungen in den Wangen.

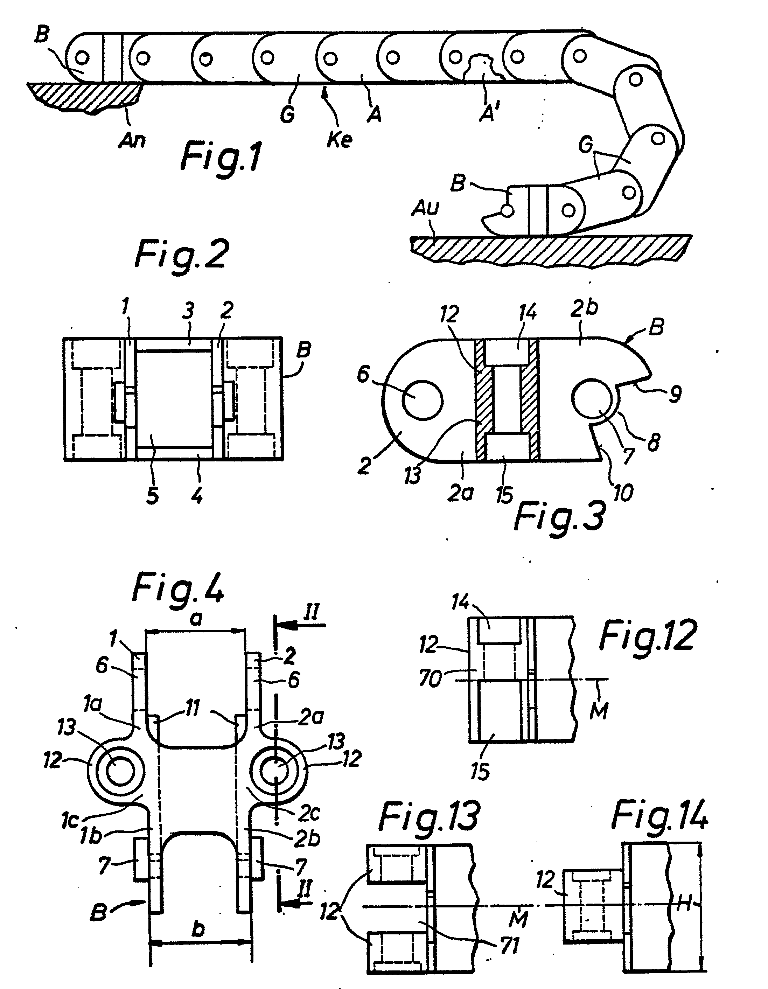

Die selbst- oder freitragende Kette Ke nach Fig. 1 besteht aus Kunststoff und ist aus aufeinanderfolgenden Kettengliedern G gebildet, die gleichartig ausgebildet sind, deren parallele Seitenteile A, A' paarweise auf gleicher Höhe gelegen sind, wobei mittige Zapfen und Bohrungen in den Gliedern die Schwenkbarkeit benachbarter Glieder G gewährleisten. Durch bekannte Mittel wird einerseits die Schwenkbarkeit aufeinanderfolgender Glieder gegeneinander gewährleistet und andererseits die Steifigkeit dieser Glieder in entgegengesetzter Querrichtung garantiert. - Die Enden der Kette Ke sind mit Hilfe der erfindungsgemäßen Befestigungsteile B mit einer Anlage An, z. B. einem beweglichen Maschinenteil und einer Auflage Au, z. B. an einem stationären Leitungsanschluß befestigt. - Wie aus Fig. 11 erkennbar ist, kann der Befestigungsteil auch den Mittelteil einer Kette bilden.

Der in den Fig. 2 bis 4 dargestellte Befestigungsteil B des oder der Enden kettenförmiger Energieleitungsträger besteht im wesentlichen aus den beiden parallelen Wangen 1, 2 aus Kunststoff, die durch einen oberen Steg 3 und einen unteren Steg 4 miteinander verbunden sind. Die Wangen 1, 2 und die Stege 3, 4 lassen einen Innenraum 5 entstehen, der nicht dargestellte Leitungen aufzunehmen vermag. -

Der mittlere Abstand der Wangenabschnitte 1a, 2a voneinander ist größer als der mittlere Abstand der Wangenabschnitte 1b, 2b voneinander. Hierbei entspricht die lichte Weite a zwischen den Abschnitten 1a, 2a der Außenweite b der Abschnitte 1b, 2b unter Berücksichtigung eines geringen Spiels. Zwischen den Abschnitten 1a, 2a der Wangen 1, 2 finden die benachbarten Seitenteile des anschließenden Kettengliedes Platz. Somit entspricht das Befestigungsteil nach Fig. 2 bis 4 in seiner Konfiguration einem Glied des an dem Befestigungsteil anzuschließenden kettenförmigen Trägers. Hierbei entspricht auch der Zwischenabschnitt 1c, 2c der Wangen 1a, 2a dem Zwischenabschnitt eines angrenzenden Kettengliedes.

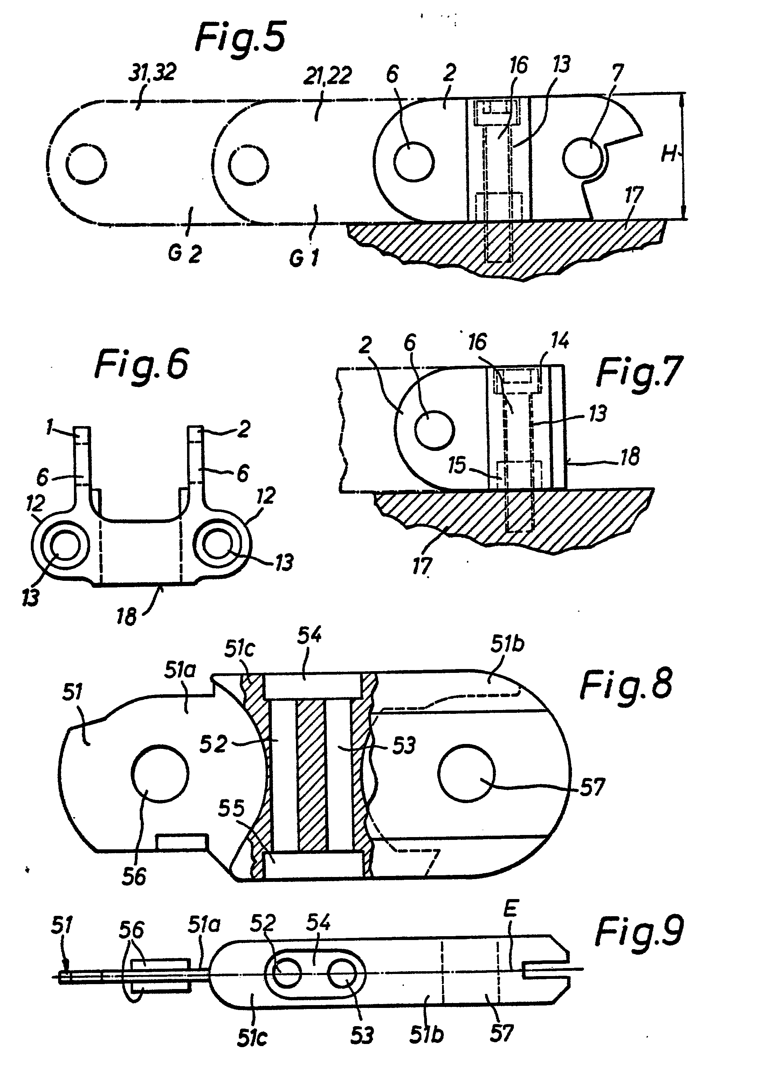

Die Abschnitte 1a, 2a der Wangen 1, 2 haben in bekannter Weise je eine Bohrung 6, wie auch die Wangenabschnitte 1b, 2b mit einem vorspringenden Drehzapfen 7 versehen sind. Ferner besitzen die Abschnitte 1b, 2b in bekannter Weise einen Ausschnitt 8, dessen Begrenzungskanten 9, 10 mit entsprechenden einwärts ragenden Bereichen 11 der Abschnitte 1, 2 eines anzuschließenden Kettengliedes zusammenwirken und die Schwenkbarkeit dieses Kettengliedes gegenüber dem Befestigungsteil ebenso bestimmen, wie dies bei den Kettengliedern der mit dem Befestigungsteil zu verbindenden Gliederkette der Fall ist (vgl. auch Fig. 11). Auf Höhe der Abschnitte 1c, 2c, d. h. etwa in der Mitte des in Fig. 2 bis 4 dargestellten Befestigungsteils, sind an den Wangen 1, 2 zwei auswärts gerichtete, rohrförmige Lageraugen 12 angeordnet, die sich, wie Fig. 2 und 4 erkennen lassen, über die gesamte Höhe der Wangen 1, 2 aus Kunststoff erstrecken. Die Bohrungen 13 der Augen 12 nehmen, wie in Verbindung mit Fig. 5 erläutert wird, eine Befestigungs- und Spannschraube 16 auf. Die Bohrungen 13 haben an ihren beiden Enden Erweiterungen 14, 15, in die die Schraubenköpfe versenkt werden können. Die gleichartigen, in Fig. 3 unteren Erweiterungen 15, dienen dazu, die Wangen paarweise um 180° gegenüber der Darstellung in Fig. 2 und 3 auf einer Unterlage derart befestigen zu können, daß dann der Schraubenkopf von der Erweiterung 15 aufgenommen werden kann.

Wie Fig. 5 erkennen läßt, verspannen die Schrauben 16 die Wangen 1, 2 annähernd über deren gesamte Höhe H mit der Auflage 17, wobei die Schraube 16 jeder Wange ein zusätzliches Festigkeitselement für die Kunststoffwangen 1, 2 bildet.

Wie Fig. 5 zeigt, entsprechen die Wangen 1, 2 den Seitenteilen 21, 22 und 31, 32 der an dem Befestigungsteil angeschlossenen Kettenglieder $G_1$, $G_2$ usw.

Aus raumtechnischen wie auch aus ästhetischen Gründen können die Wangenabschnitte 1b, 2b bei der Ausführungsform nach Fig. 2 bis 4 fortgelassen werden, so daß sich ein Befestigungsteil nach Fig. 6 und 7 mit einer Kante 18 ergibt. Auch hier sind wiederum die Abschnitte 1a, 2a der Wangen 1, 2 vorgesehen, wie auch die seitlichen rohrförmigen Augen 12 zur Aufnahme der Befestigungs- und Spannschrauben 16 vorgesehen sind. Auch weist die Bohrung 13 der Augen 12 eine obere und untere Erweiterung 14, 15 auf.

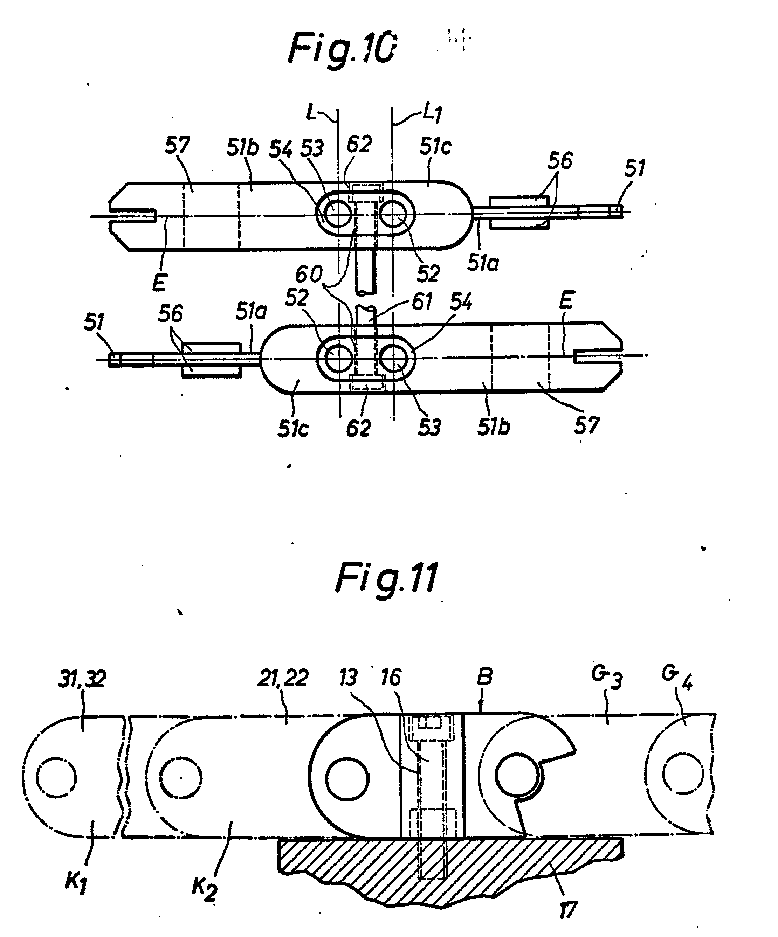

Bei der Ausführungsform nach Fig. 8 und 9 ist der Befestigungsteil aus zwei einzelnen und nicht zwangsnotwendig miteinander verbundenen Wangen 51 gebildet. Die beiden zur Anwendung gelangenden Wangen können hierbei gleichartig ausgebildet und wie in der Fig. 10 gezeigt, drehsymmetrisch angeordnet sein. Die beiden Wangen 51 des Befestigungsteils nach Fig. 8 bis 10 besitzen in ihren Mittelabschnitten 51c zwei in der Längsmittelebene E der Wangen angeordnete Bohrungen 52, 53, denen eine obere Erweiterung 54 und eine untere Erweiterung 55 zugeordnet ist, die den Erweiterungen 14, 15 der Bohrung 16 in den Wangen 1, 2 nach Fig. 2 bis 7 entsprechen. Die in Fig. 8 und 9 dargestellte Wange 51 besitzt einen Wangenabschnitt 51a mit einem Zapfen 56 und einen Abschnitt 51b mit einer Bohrung 57.

Bei der Ausführungsform nach Fig. 8 und 9 kann auf einen Verbindungssteg der Wangen, ähnlich den oberen und unteren Stegen 3, 4 der Ausführungsform nach Fig. 2 bis 7 verzichtet werden.

Fig. 10 zeigt die Anordnung zweier Wangen 51 nach Fig. 8 und 9, die drehsymmetrisch angeordnet sind. Hierbei ist erkennbar, daß die beiden Bohrungspaare 52, 53 auf gemeinsamen Verbindungslinien L, $L_1$ gelegen sind und die Mittelabschnitte 51c zwischen den senkrechten Bohrungen 52, 53 horizontale Bohrungen 60 für im Abstand übereinander gelegene Stangen 61 besitzen, deren Köpfe und Muttern in Ausnehmungen 62 Aufnahme finden.

In Fig. 11 ist veranschaulicht, daß die vorstehend beschriebenen Befestigungsteile, so auch ein Befestigungsteil nach Fig. 2 bis 4, als mittlerer Befestigungsteil auf einer Unterlage 17 angebracht werden können. Bei gleicher Ausführungsform des Befestigungsteils nach Fig. 2 bis 4 können außer den Kettengliedern 21, 22 und 31, 32 von Kettengliedern $G_1$, $G_2$ weitere Kettenglieder $G_3$, $G_4$ an die Wangen 1, 2 des Befestigungsteils B angeschlossen werden, ohne daß hierzu der Befestigungsteil eine andere als die in Fig. 2 bis 4 dargestellte Ausführungsform erhalten muß. Gleiches gilt von den Befestigungsteilen nach Fig. 8 bis 10.

Die Fig. 12 bis 14 zeigen Abwandlungen der die Schrauben aufnehmenden Bohrungen und seitlichen Lageraugen. So weist das seitliche Lagerauge 12 nach Fig. 12 eine obere Erweiterung 14 und eine untere Erweiterung 15 unterschiedlicher Länge auf, wobei der zwischen diesen Erweiterungen gelegene Abschnitt 70 nur einen Teil der Höhe H ausmacht und dieser Abschnitt oberhalb der Quermittelebene M gelegen ist. - Bei der Ausführungsmöglichkeit nach Fig. 13 ist das seitliche Lagerauge 12 mittig durch den Zwischenraum 71 unterbrochen. - Fig. 14 zeigt ein gegenüber der Höhe H verkürztes und symmetrisch in der Quermittelebene M gelegenes Lagerauge 12.

## Patentansprüche

1. Mittel- oder Endbefestigungsteil (B) für kettenförmige Energieleitungsträger (Ke) zwischen einem stationären Leitungsanschluß und einem beweglichen Verbraucher, bestehend aus zwei parallelen und senkrecht zu einer An- oder Auflage (An, Au, 17) and dem Leitungsanschluß oder dem Verbraucher anzuordnenden und mit der An- oder Auflage mittels Schrauben verbundenen Wangen (1, 2; 51), mit denen die Seitenteile (A, A') der ersten oder der letzten Kettenglieder (G) oder der Kettenmittelglieder des kettenförmigen Energieträgers (Ke) verbunden sind, dadurch gekennzeichnet, daß die Wangen (1, 2; 51) des Befestigungsteils (B) einteilig ausgebildet sind, aus Kunststoff bestehen und eine Anlagefläche (Grund der Erweiterung 14, 15; 54, 55) für die Köpfe der unmittelbar an den Wangen angreifenden Schrauben aufweisen, wobei der Abstand der Anlagefläche von der An- oder Auflagefläche der Wangen (1, 2; 51) and die An- oder Auflage (An, Au, 17) mindesten 1/4 der Wangenhöhe (H) beträgt.

2. Mittel- oder Endbefestigungsteil nach Anspruch 1, dadurch gekennzeichnet, daß die Schrauben (16) die einteiligen Wangen (1, 2; 51) des Befestigungsteils über deren gesamte oder annähernd gesamte Höhe (H) gegen die An- oder Auflage (An, Au, 17) verspannen.

3. Mittel- oder Endbefestigungsteil nach Anspruch 1, dadurch gekennzeichnet, daß die Wangen (1, 2; 51) des Befestigungsteils ganz oder teilweise die Konfiguration der Seitenteile der Glieder der Energieleitungskette aufweisen.

4. Mittel- oder Endbefestigungsteil nach Anspruch 1, dadurch gekennzeichnet, daß die Wangen (51) des Befestigungsteils eine den Durchmesser der Schrauben überschreitende Dicke aufweisen, und die Schraubenbohrungen (52, 53) in oder ungefähr in der Längsmittelebene (E) der Wangen (51) gelegen sind.

5. Mittel- oder Endbefestigungsteil nach Anspruch 1, dadurch gekennzeichnet, daß die Wangen (1, 2) des Befestigungsteils seitliche, über die Höhe oder ungefähr über die Höhe (H) der Wangen reichende, röhrenartige Augen (12) aufweisen, die die Spannschrauben (16) aufnehmen.

6. Mittel- oder Endbefestigungsteil nach Anspruch 4 und 5, dadurch gekennzeichnet, daß jede Wange (51) des Befestigungsteils zwei in der Längsmittelebene (E) gelegene Bohrungen (52, 53) oder zwei seitliche, röhrenartige Augen aufweist.

7. Mittel- oder Endbefestigungsteil nach Anspruch 1 und einem der Ansprüche 4 oder 5, dadurch gekennzeichnet, daß zwischen den Wangen des Befestigungsteils Stege (60) angeordnet sind.

8. Mittel- oder Endbefestigungsteil nach Anspruch 1 und einem der Ansprüche 2 und 7, dadurch gekennzeichnet, daß die Wangen (1, 2) des Befestigungsteils durch Kopf- und Fußquerteile (3, 4) miteinander verbunden sind und mit diesen einen Bauteil bilden.

## Renvendications

1. Elément de fixation médian ou terminal B pour des chaines porte-cables d'énergie (Ke) entre un raccordement de cables stationnaire et un utilisateur mobile, constitué par deux joues (1, 2; 51) parallèles devant être disposées perpendiculairement à un support ou une base (An, Au, 17) sur le raccordement de cable ou sur l'utilisateur, et reliés à la base ou au support par des vis, joues avec lesquelles les parties latérales (A, A') des premiers ou des derniers maillons (G) ou des maillons médians des chaînes porte-cables d'énergie (Ke) sont reliées, caractérisé en ce que les joues (1, 2; 51) de l'élément de fixation (B) sont réalisées d'une seule pièce en matière plastique et comportent une surface d'appui (fond de l'élargissement 14, 15; 54, 55) pour les têtes des vis agissant directement sur les joues, la distance entre ces surfaces d'appui des joues (1, 2; 51) et le support ou la base (AN, Au, 17) atteint au moins le quart de la hauteur (H) des joues.

2. Elément de fixation médian ou terminal selon la revendication 1 caractérisé en ce que les vis (16) serrent les joues (1, 2; 51) monobloc de l'élément de fixation contre le support ou la base (An, Au, 17) sur toute leur hauter ou approximativement toute la hauteur (H).

3. Elément de fixation médian ou terminal selon la revendication 1 caractérisé en ce que les joues (1, 2; 51) de l'élément de fixation ont en totalité ou en partie la configuration des parties latérales des maillons de la chaine porte-cables d'énergie.

4. Elément de fixation médian ou terminal selon la revendication 1 caractérisé en ce que les joues 851) de l'élément de fixation ont une épaisseur dépassant le diamètre des vis, et en ce que les alésages des vis (52, 53) sont placés dans ou approximativement dans le plan longitudinal médian (E) des joues (51).

5. Elément de fixation médian ou terminal selon la revendication 1, caractérisé en ce que les joues (1, 2) de l'élément de fixation comportent des paliers (12) tubulaires allant au dessus ou approximativement au-dessus de la hauteur (H) des joues, lesquelles reçoivent les vis de serrage 816).

6. Elément de fixation médian ou terminal selon la revendication 4 ou 5, caractérisé en ce que chaque joue (51) de l'élément de fixation comporte deux alésages (52, 53) placés dans le plan longitudinal médian (E), ou deux paliers tubulaires latéraux.

7. Elément de fixation médian ou terminal selon la revendication 1 ou l'une des revendications 4 ou 5, caractérisé en ce que des dos (60) sont disposés entre les joues de l'élément de fixation.

8. Elément de fixation médian ou terminal selon la revendication 1 et l'une des revendications 2 et 7, caractérisé en ce que les joues (1, 2) de l'élément sont reliées ensemble par des éléments transversaux de pied et de tête (4, 3) et constituent un élément de construction.

## Claims

1. A central or end securing element (B) for chain-shaped power linecarriers (Ke) between a stationary line terminal and a movable consumer, comprising two parallel cheeks (1, 2; 51) which are to be arranged perpendicular to a support or bearing surface (An, Au, 17) on the line terminal or consumer and are connected with the support or bearing surface by means of screws, with which cheeks the lateral portions (A, A') of the first or last chain links (G) or the central chain links of the chain-shaped energy carrier (Ke) are connected, characterised in that the cheeks (1, 2; 51) of the securing element (B) are integrally formed, are made of plastics material and comprise a bearing surface (base of the enlarged portion 14, 15; 54, 55) for the heads of the screws acting directly in the ckeeks, the distance between the support or bearing surface of the cheeks (1, 2; 51) and the support or bearing (An, Au, 17) being at least 1/4 of the height (H) of the cheeks.

2. A central or end securing element according to claim 1, characterised in that the screws (16) tension the integrally formed cheeks (1, 2; 51) of the securing element over the latter's entire or approximately entire height (H) against the support or bearing (An, Au, 17).

3. A central or end securing element according to claim 1, characterised in that the cheeks (1, 2; 51) of the securing element correspond entirely or partially in their shape to the lateral portions of the links of the power line chain.

4. A central or end securing element according to claim 1, characterised in that the cheeks (51) of the securing element have a thickness exceeding the diameter of the screws, and the screw bores (52, 53) are arranged in or approximately in the longitudinal central plane (E) of the cheeks (51).

5. A central or end securing element according to claim 1, characterised in that the cheeks (1, 2) of the securing element comprise lateral tubular eyelets (12) projecting beyond the height or approximately beyond the height (H) of the cheeks, which eyelets receive the tensioning screws (16).

6. A central or end securing element according to claim 4 and 5, characterised in that each cheek (51) of the securing element comprises two bores (52, 53) arranged in the longitudinal central plane (E) or two lateral tubular eyelets.

7. A central or end securing element according to claim 1 and one of claims 4 or 5, characterised in that webs (60) are arranged between the cheeks of the securing element.

8. A central or end securing element according to claim 1 and one of claims 2 and 7, characterised in that the cheeks (1, 2) of the securing element are connected with one another by upper and base transverse members (3, 4) and form a structural part with the said members.

Fig.1

Fig.2

Fig.3

Fig.4

Fig.12

Fig.13

Fig.14

**Fig.5**

**Fig.6**

**Fig.7**

**Fig.8**

**Fig.9**

## Fig.10

## Fig.11